# EUROPÄISCHE PATENTSCHRIFT

(11) **EP 2 785 816 B1**
(45) Veröffentlichungstag und Bekanntmachung des Hinweises auf die Patenterteilung: **14.11.2018**
(21) Anmeldenummer: 12772722.0
(22) Anmeldetag: 29.09.2012
(51) Int. Cl.: C10L 5/36, C10L 5/44, C10L 5/14, C10L 9/12

(54) **BRIKETT MIT BINDEMITTEL UND NATRIUM- UND/ODER KALIUMSILIKATEN**
BRIQUETTE WITH BINDER AND SODIUM AND/OR POTASSIUM SILICATES
BRIQUETTE CONTENANT UN LIANT ET DES SILICATES DE SODIUM ET/OU POTASSIUM

(30) Priorität: 02.12.2011 DE 102011119974
(43) Veröffentlichungstag der Anmeldung: 08.10.2014
(73) Patentinhaber: RWE Power Aktiengesellschaft, 45128 Essen (DE)
(72) Erfinder: STORMANNS , Franck, 41849 Wassenberg (DE)
(74) Vertreter: Richly & Ritschel Patentanwälte PartG mbB
(86) Internationale Anmeldenummer: PCT/EP2012/004119
(87) Internationale Veröffentlichungsnummer: WO 2013/079132

(56) Entgegenhaltungen:
- EP-A1- 1 978 076
- GB-A- 293 136
- GB-A- 328 082
- GB-A- 446 761
- GB-A- 454 796
- US-A1- 2008 022 586

## Beschreibung

Die Erfindung betrifft ein Brikett als stückiges Agglomerat von feinkörnigem bis staubförmigem Braunkohlenkoks mit wenigstens einem organischen Bindemittel in Form von Stärke und/oder auf Basis von Stärke.

Ein solches Brikett, beispielsweise als Grillbrikett, ist aus der DE 199 61 325 C2 bekannt. Dieses Grillbrikett ist als ein Substitut für herkömmliche Grillbriketts aus Holzkohlenstaub vorgesehen, da die Herstellung von Holzkohle verhältnismäßig aufwändig und teuer ist. Auch ist die Herstellung von Holzkohlebriketts bzw. von Holzkohle wegen des damit verbundenen Hartholzverbrauchs unter Umweltschutzgesichtspunkten nicht wünschenswert. Daher haben sich Briketts gemäß der in der DE 199 61 325 beschriebenen Art grundsätzlich bewährt. Da das Anzünd- und Durchglühverhalten von Briketts aus Braunkohlenkoks im Allgemeinen träger ist, als dasjenige von Briketts auf Holzkohlebasis, ist es bekannt, bei Briketts aus Braunkohlenkoks Zündhilfsmittel in Form von Cellulose und/oder Hemicellulose zuzugeben.

Aus der EP 1 978 076 A1 ist ein anderes Brikett der eingangs genannten Art auf der Basis von Braunkohlenkoks bekannt, welches anstelle von Cellulose und/oder Hemicellulose enthaltenden Materialien als Zündhilfsmittel einen Zusatz eines Sauerstoff freisetzenden Oxidationsmittels umfasst. Der Zusatz ist so beschaffen, dass beim Abbrand der Briketts beschleunigt Sauerstoff freigesetzt wird. Dieser Zusatz kann in dem Agglomerat verteilt sein oder auf die Briketts als Sprühimprägnierung aufgebracht worden sein.

Es hat sich herausgestellt, dass die Briketts gemäß EP 1 978 076 A1 nochmals eine überraschend deutliche Verbesserung des Anzünd- und Brennverhaltens gegenüber den in der DE 199 61 325 beschriebenen Briketts erzielen.

Die Briketts gemäß EP 1 978 076 A1 besitzen allerdings noch weiteres Verbesserungspotential. Die möglichen Verbesserungen, stehen in erster Linie im Zusammenhang mit einer Akzeptanz des Erzeugnisses als Grillbrikett. Nicht selten finden zum Anfeuern von Grillfeuern sog. Anzündkamine Anwendung, in denen der Grillbrennstoff zunächst in einer gerichteten luftdurchströmbaren Schüttung vorgezündet wird und nach Anglühen in das Grillbehältnis oder Grillbecken umgeschüttet wird. Dabei kann es unter Umständen zu einer starken Funkenentwicklung kommen, die als unangenehm und störend wahrgenommen wird. Die Farbe der Asche ist bedingt durch die mineralische Zusammensetzung von Braunkohlenkoks leicht gelblich, was von Endverbrauchern gelegentlich als minderwertig empfunden wird, grundsätzlich allerdings keinerlei Rückschlüsse auf hygienisch bedenkliche Inhaltstoffe im Brennstoff zulässt. Schließlich lässt sich die Feuerstandsfestigkeit und auch das Ausbrandverhalten der bekannten Briketts noch verbessern.

Aus der GB 293,136 A ist ein verbessertes Brikettierverfahren zur Brikettierung von Kohlen unter Verwendung von Teerpech bekannt. Diesem Verfahren liegt das Problem zugrunde, die Menge des etwa erforderlichen bitominösen Bindemittels in Form von Teerpech zu reduzieren, u. a. auch zur Verringerung der Rauchentwicklung beim Abbrand. Hierzu wird in der Druckschrift vorgeschlagen, einen Teil des bitominösen Bindemittels durch eine wässrige Emulsion eines weiteren Bindemittels zu ersetzen. Als Substitut wird eine Wasser-in-Öl-Emulsion vorgeschlagen, die mit einem Stärkebrand und Zusätzen wie Natriumsilikat angerührt wurde.

Aus der GB 446,761 A ist ebenfalls die Brikettierung von Kohlen von bitominösen Bindemittels bekannt, wobei ein Teil des bitominösen Bindemittels dort ebenfalls durch eine wässrige Dispersion ersetzt wird, die als Wasser-in-Öl-Emulsion vorliegt und Teile von Stärke sowie Wasserglas umfasst.

Insbesondere wegen des Anteils an bitominösen Bindemitteln sind die in den genannten Veröffentlichungen beschriebenen Briketts nicht hygienisch unbedenklich.

Der Erfindung liegt daher die Aufgabe zugrunde, ein Brikett der eingangs genannten Art insbesondere im Hinblick auf die gewünschten Eigenschaften eines Grillbriketts weiter zu verbessern. Insbesondere sollen der Problematik der Funkenentwicklung, der Verfärbung der Asche, der Feuerstandsfestigkeit und den Ausbrandeigenschaften Rechnung getragen werden.

Die Aufgabe wird gelöst durch ein Brikett mit den Merkmalen des Anspruchs 1 sowie eine Verwendung gemäß Anspruch 5 und ein Verfahren zur Herstellung eines Grillbriketts mit den Merkmalen des Anspruchs 6. Vorteilhafte Ausgestaltungen der Erfindung ergeben sich aus den Unteransprüchen.
Es hat sich überraschend herausgestellt, dass die vorgenannten Eigenschaften mit einem Brikett gemäß der Erfindung signifikant verbessert werden. Die der Erfindung zugrunde liegende Aufgabe wird gelöst durch ein Brikett als stückiges Agglomerat von feinkörnigem bis staubförmigem Braunkohlenkoks mit wenigstens einem organischen Bindemittel in Form von Stärke welches sich durch einen Zusatz von Natrium- und/oder Kaliumsilikaten auszeichnet, der homogen in dem Agglomerat verteilt ist. Als Zusatz kann insbesondere Wasserglas Anwendung finden. Unter Wasserglas werden aus einer Schmelze erstarrte glasartige, amorphe, wasserlösliche Natrium- und Kaliumsilikate oder ihre wässrigen Lösungen bezeichnet.
Es hat sich überraschend herausgestellt, dass der Zusatz von Wasserglas bzw. von Natrium- und/oder von Kaliumsilikaten insbesondere den Funkenflug deutlich reduziert. Dies ist vermutlich darauf zurückzuführen, dass die in feiner Körnung vorliegenden Silikate bei der Verbrennung zur Schlackebildung neigen, wodurch der Funkenflug unterbunden wird. Auch die Farbe der Asche wird durch einen entsprechenden Anteil, beispielsweise von Natriumsilikat, so verändert, dass die Asche den vom Verbraucher akzeptierten weißlichen/beigen Farbton annimmt.

Als Rest ist ein zündverbessernder Zusatz in Form eines sauerstofffreisetzenden Oxidationsmittels vorgesehen.
Bevorzugt ist das Brikett gemäß der Erfindung als Grillbrikett zur Zubereitung von Speisen auf offener Glut vorgesehen.

Bei einer zweckmäßigen Variante des Briketts gemäß der Erfindung zeichnet sich dieses durch einen Oberflächenauftrag eines Sauerstoff freisetzenden Oxidationsmittels aus. Das Oxidationsmittel kann allerdings auch homogen in dem Brikett verteilt sein. Im Hinblick auf geeignete Oxidationsmittel und deren Einbringung oder Aufbringung wird auf die EP 1 978 076 A1 verwiesen, auf die hier vollinhaltlich zum Zwecke der Offenbarung Bezug genommen wird.

Als Oxidationsmittel kommen beispielsweise Alkali- oder Erdalkalisalze mit Sauerstoff freisetzenden Anionen in Betracht.

Eine bevorzugte Variante des Grillbriketts gemäß der Erfindung zeichnet sich dadurch aus, dass der Braunkohlenkoks in Form von Herdofenkoks in dem Agglomerat enthalten ist und dass der Braunkohlenkoks eine mittlere Korngröße von bis zu 1 mm aufweist.

Bei dem Verfahren gemäß der Erfindung wird zunächst eine Wasserglaslösung, beispielsweise als Natrium- oder Kalium-Wasserglaslösung, hergestellt. Mit der Wasserglaslösung wird ein wässriger Bindemittelansatz erstellt, anschließend erfolgt die Vermischung des Bindemittelansatzes mit dem Braunkohlenkoks. Der Bindemittelansatz umfasst beispielsweise Stärke, die in der Wasserglaslösung suspendiert wird.

Bei einer Variante des Verfahrens kommt kaltquellende Stärke zur Anwendung, die ohne Zugabe von Wärme verrührt werden kann. Alternativ wird die Stärke verkleistert, d. h. unter Einwirkung von Wärme suspendiert und agitiert.

Der pressfertigen Mischung können zusätzlich Alkali- und/oder Erdalkalisalze zugegeben werden, alternativ ist es möglich, auf die Pressformlinge eine Oxidationsmittellösung von Alkali- und/oder Erdalkalisalzen aufzusprühen.

Bei einem Verfahren gemäß der Erfindung ist zunächst vorgesehen, einen Bindemittelansatz mit 73 Masse-% Wasser, 12 Masse-% Stärke und 15 Masse-% Zusatzstoff herzustellen. Die 15 % des Zusatzstoffs werden in Form einer
40 %igen Wasserglaslösung zugegeben, so dass der Zusatzstoff als Feststoffanteil von 6 % an dem Bindemittelansatz vorliegt. Die Wasserglaslösung wird als Natrium- oder Kalium-Wasserglaslösung hergestellt. Dabei wird zunächst die Wasserglaslösung dem Wasser zugegeben, sodann wird die so hergestellte wässrige Suspension durch Wärmeeinwirkung verkleistert. Dadurch, dass das Wasserglas dem Wasser vor der Stärke zugegeben wird, kann sich das Wasserglas homogener verteilen. Die Verkleisterung des Ansatzes kann beispielsweise in einer dampfbetriebenen Heizeinrichtung (Jet-Cooker) erfolgen. Als Zusatzstoff können neben Natrium-Wasserglas oder Kalium-Wasserglas auch geringe Mengen von Alkali- oder Erdalkalisalze vorgesehen sein. Der verkleisterte Bindemittelansatz kann mit feinkörnigem bis feinstkörnigem Braunkohlenkoks verrührt und verknetet werden, wobei die so hergestellte Brikettiermischung beispielsweise einen Anteil von 69,5 % Braunkohlenkoks und 30,5 % Bindemittelansatz umfasst. Die Brikettiermischung kann beispielsweise in einer Doppelwalzenpresse zu vereinzelten Presslingen verarbeitet werden, wobei das fertige Brikett bzw. der fertige Pressling beispielsweise einen Anteil von 92,5 % Koks, 5 % Stärke und 2,5 % Zusatzstoff (Masse-%, bezogen auf die wasserfreie Substanz) enthält.

Die mittels einer Doppelwalzenpresse erzeugten Presslinge (Briketts) werden anschließend einer Trocknungsanlage zugeführt. Das fertige Brikett bzw. der fertige Pressling umfasst beispielsweise einen Anteil von 92,5 Masse-% Koks, 5 Masse-% Stärke und 2,5 Masse-% Zusatzstoff. Der Zusatzstoff kann zu 100 % aus Kalium-Wasserglas oder Natrium-Wasserglas (Na₂SiO₃/KSiO₃) bestehen.

Auf den fertigen und getrockneten Pressling kann anschließend ein Oxidationsmittel in Form einer Alkali- oder Erdalkalisalzlösung mit Sauerstoff freisetzenden Anionen aufgesprüht werden.

Als Stärke kann beispielsweise Mais-, Weizen- oder Kartoffelstärke Anwendung finden.

Bei einem anderen Ausführungsbeispiel gemäß der Erfindung wird zunächst eine Zusatzstoff-Lösung als 40 %ige Lösung mit 12 Masse-% Feststoff angerührt, wobei diese Lösung mit Wasser verdünnt und mit Stärke zu einem Bindemittelansatz verarbeitet wird, und wobei der Bindemittelansatz 58 % Wasser, 12 Masse-% Stärke und 30 Masse-% des Zusatzstoffs in Form einer 40 %igen Wasserglaslösung enthält, was einem Wasserglas-Feststoffanteil von 12 Masse-% entspricht. Die Brikettiermischung umfasst 69,5 Masse-% Braunkohlenkoks und 30,5 Masse-% Bindemittelansatz. Das fertige Brikett bzw. der fertige Pressling kann einen Braunkohlenkoksanteil von 90 Masse-%, einen Stärkeanteil von 5 Masse-% und einen Zusatzstoffanteil von 5 Masse-%, bezogen auf die wasserfreie Substanz, aufweisen.

Bei einer anderen Zusammensetzung des erfindungsgemäßen Presslings kann der Anteil von Braunkohlenkoks beispielsweise 89 Masse-% betragen, der Stärkeanteil 5 Masse-% und der Anteil an Zusatzstoffen 5 Masse-%, jeweils bezogen auf die wasserfreie Substanz. Der Rest von 1 % kann sich durch einen Zusatz eines Sauerstoff freisetzenden Oxidationsmittels ergeben, das beispielsweise homogen in dem Agglomerat verteilt ist, oder welches als Oberflächenauftrag auf den fertigen Pressling vorgesehen ist.

## Patentansprüche

1. Brikett als stückiges Agglomerat von feinkörnigem bis staubförmigem Braunkohlenkoks mit wenigstens einem organischen Bindemittel in Form von Stärke, umfassend einen Zusatz von Natrium- und/oder Kaliumsilikaten, der homogen in dem Agglomerat verteilt ist, **gekennzeichnet durch** eine Zusammensetzung aus Braunkohlenkoks mit einem Anteil von zwischen 80 und 94 Masse-%, dem Bindemittel in Form von Stärke mit einem Anteil von 1 bis 6 Masse-%, dem Zusatz von Natrium- und/oder Kaliumsilikaten mit einem Anteil von 1 bis 6 Masse-% und einem sauerstofffreisetzenden Oxidationsmittel als Rest von von 0 bis 8 Masse-%, jeweils bezogen auf die wasserfreie Substanz.

2. Brikett nachAnspruch 1, **gekennzeichnet durch** einen Oberflächenauftrag eines Sauerstoff freisetzenden Oxidationsmittels.

3. Brikett nach einem der Ansprüche 1 oder 2, **dadurch gekennzeichnet, dass** als Oxidationsmittel Alkali- oder Erdalkalisalze mit Sauerstoff freisetzenden Anionen vorgesehen sind.

4. Brikett nach einem der Ansprüche 1 bis 3, **dadurch gekennzeichnet,**
**dass** der Braunkohlenkoks in Form von Herdofenkoks in dem Agglomerat enthalten ist und dass der Braunkohlenkoks eine mittlere Korngröße von bis zu 1 mm aufweist.

5. Verwendung eines Briketts nach einem der Ansprüche 2 bis 4 als Grillbrikett zur Zubereitung von Speisen auf offener Glut.

6. Verfahren zur Herstellung eines eines Grillbriketts mit den Merkmalen eines der Ansprüche 1 bis 4, folgende Verfahrensschritte umfassend:
- Herstellen einer Wasserglas-Lösung,
- Herstellen eines wässrigen Bindemittelansatzes mit einem Bindemittel in Form von Stärke unter Verwendung der Wasserglas-Lösung,
- die Vermischung des Bindemittelansatzes mit feinkörnigem bis staubförmigem Braunkohlenkoks,
- das Stückigmachen der Mischung durch Pressagglomeration und
- das Trocknen der Pressformlinge,
wobei dem Bindemittelansatz eine Oxidationsmittellösung, umfassend Alkali- und Erdalkalisalze zugegeben wird.

7. Verfahren nach Anspruch 6, **dadurch gekennzeichnet, dass** der Bindemittelansatz Stärke umfasst, die in der Wasserglas-Lösung suspendiert wird.

8. Verfahren nach Anspruch 7, **dadurch gekennzeichnet, dass** kaltquellende Stärke verwendet wird.

9. Verfahren nach Anspruch 7, **dadurch gekennzeichnet, dass** die Stärke unter Wärmeeinwirkung verkleistert wird.

10. Verfahren nach einem der Ansprüche 6 bis 9, **dadurch gekennzeichnet, dass** auf die Pressformlinge eine Oxidationsmittellösung von Alkali- und/oder Erdalkalisalzen aufgesprüht wird.

## Claims

1. Briquette as pelletized agglomerate of finely particulate to dust-like brown coal coke with at least one organic binder in the form of starch, comprising an addition of sodium silicates and/or potassium silicates which is homogeneously distributed in the agglomerate, **characterized by** a composition comprising brown coal coke in a proportion of from 80 to 94% by mass, the binder in the form of starch in a proportion of from 1 to 6% by mass, the addition of sodium silicates and/or potassium silicates in a proportion of from 1 to 6% by mass and an oxygen-releasing oxidant as balance of from 0 to 8% by mass, in each case based on the water-free substance.

2. Briquette according to Claim 1, **characterized by** a surface application of an oxygen-releasing oxidant.

3. Briquette according to either Claim 1 or 2, **characterized in that** alkali metal or alkaline earth metal salts having oxygen-releasing anions are provided as oxidant.

4. Briquette according to any of Claims 1 to 3, **characterized in that** the brown coal coke is present in the form of hearth furnace coke in the agglomerate and **in that** the brown coal coke has an average particle size of up to 1 mm.

5. Use of a briquette according to any of Claims 2 to 4 as barbecue briquette for preparing food over open glowing coals.

6. Process for producing a barbecue briquette having the features of any of Claims 1 to 4, comprising the following process steps:
- production of a water glass solution,
- production of an aqueous binder mix comprising a binder in the form of starch using the water glass solution,
- mixing of the binder mix with finely particulate to dust-like brown coal coke,
- pelletization of the mixture by pressing agglomeration and
- drying of the pressed shaped bodies,
wherein an oxidant solution comprising alkali metal and alkaline earth metal salts is added to the binder mix.

7. Process according to Claim 6, **characterized in that** the binder mix comprises starch which is suspended in the water glass solution.

8. Process according to Claim 7, **characterized in that** cold-swelling starch is used.

9. Process according to Claim 7, **characterized in that** the starch is made into a paste under the action of heat.

10. Process according to any of Claims 6 to 9, **characterized in that** an oxidant solution of alkali metal and/or alkaline earth metal salts is sprayed onto the pressed shaped bodies.

## Revendications

1. Briquette sous la forme d'un agglomérat en fragments de coke de lignite à grains fins jusqu'à pulvérulent comprenant au moins un liant organique sous la forme d'amidon, comprenant un ajout de silicates de sodium et/ou de potassium, qui est réparti de manière homogène dans l'agglomérat, **caractérisée par** une composition comprenant du coke de lignite en une proportion comprise entre 80 et 94 % en masse, le liant sous la forme d'amidon en une proportion de 1 à 6 % en masse, l'ajout de silicates de sodium et/ou de potassium en une proportion de 1 à 6 % en masse, et un oxydant libérant de l'oxygène en tant que résidu de 0 à 8 % en masse, à chaque fois par rapport à la substance anhydre.

2. Briquette selon la revendication 1, **caractérisée par** une application en surface d'un oxydant libérant de l'oxygène.

3. Briquette selon l'une quelconque des revendications 1 ou 2, **caractérisée en ce que** des sels alcalins ou alcalino-terreux avec des anions libérant de l'oxygène sont prévus en tant qu'oxydant.

4. Briquette selon l'une quelconque des revendications 1 à 3, **caractérisée en ce que** le coke de lignite est contenu dans l'agglomérat sous la forme de coke de four à sole et **en ce que** le coke de lignite présente un taille de grain moyenne de jusqu'à 1 mm.

5. Utilisation d'une briquette selon l'une quelconque des revendications 2 à 4 en tant que briquette pour grils pour la préparation d'aliments sur des braises.

6. Procédé de fabrication d'une briquette pour grils présentant les caractéristiques selon l'une quelconque des revendications 1 à 4, comprenant les étapes de procédé suivantes :
- la préparation d'une solution de verre soluble,
- la préparation d'une préparation aqueuse de liant avec un liant sous la forme d'amidon en utilisant la solution de verre soluble,
- le mélange de la préparation de liant avec du coke de lignite à grains fins jusqu'à pulvérulent,
- le frittage du mélange par agglomération par pressage et
- le séchage des produits agglomérés,
une solution d'oxydant comprenant des sels alcalins et alcalino-terreux étant ajoutée à la préparation de liant.

7. Procédé selon la revendication 6, **caractérisé en ce que** la préparation de liant comprend de l'amidon, qui est suspendu dans la solution de verre soluble.

8. Procédé selon la revendication 7, **caractérisé en ce que** de l'amidon gonflant à froid est utilisé.

9. Procédé selon la revendication 7, **caractérisé en ce que** l'amidon est gélatinisé sous l'effet de chaleur.

10. Procédé selon l'une quelconque des revendications 6 à 9, **caractérisé en ce qu'**une solution d'oxydant de sels alcalins et/ou alcalino-terreux est pulvérisée sur les produits agglomérés.
